# EUROPÄISCHE PATENTSCHRIFT

(11) **EP 3 789 217 B1**
(45) Veröffentlichungstag und Bekanntmachung des Hinweises auf die Patenterteilung: **04.05.2022**
(21) Anmeldenummer: 20193855.2
(22) Anmeldetag: 01.09.2020
(51) Int. Cl.: H05B 3/16, B60C 99/00

(54) **REIFENWÄRMER**
TYRE HEATER
CHAUFFE-PNEU

(30) Priorität: 05.09.2019 DE 102019123850
(43) Veröffentlichungstag der Anmeldung: 10.03.2021
(73) Patentinhaber: Alber, Markus, 72458 Albstadt-Ebingen (DE); Alber, Götz Linus, 72458 Albstadt-Ebingen (DE)
(72) Erfinder: Alber, Markus, 72458 Albstadt-Ebingen (DE); Alber, Götz Linus, 72458 Albstadt-Ebingen (DE)
(74) Vertreter: Kohler Schmid Möbus Patentanwälte

(56) Entgegenhaltungen:
- DE-A1- 10 252 924
- DE-U1-202008 018 437
- US-A1- 2003 034 340

## Beschreibung

Die Erfindung betrifft einen Reifenwärmer zur Erwärmung von Reifen oder Rädern, die eine Felge und einen Reifen aufweisen.

Um die Haftung bzw. den Grip eines Reifens zu erhöhen, ist es insbesondere im Motorsport bekannt, Reifen vor der Benutzung zu erwärmen. Hierzu ist es beispielsweise bekannt, die Reifen mit Heizdecken zu umwickeln, um dadurch die Reifen auf eine höhere Temperatur vorzuwärmen. Nachteilig dabei ist, dass lediglich die Reifen selbst erwärmt werden. Nach dem Abnehmen der Heizdecken kommt es zu einer Abkühlung der Reifen.

Alternativ dazu ist es bekannt, ein Gestell vorzusehen, in dem mehrere Räder angeordnet werden, und das Gestell durch eine Hülle zu umgeben. Mit einem gas-, heizöl- oder dieselbetriebenen Heizgebläse kann warme Luft in den von der Hülle umgebenen Heizraum eingeblasen werden. Nachteilig bei dieser Vorrichtung ist es, dass diese lediglich stationär angeordnet werden kann. Weiterhin sind solche Gasheizungen in einer Box aus Sicherheitsgründen häufig nicht erlaubt.

Die gattungsbildende DE 20 2008 018437 U1 offenbart eine Reifentemperiervorrichtung mit einem Gehäuse, das einen Aufnahmeraum aufweist, der mit zumindest einer Tür (4) öffen- und schließbar ist; mit einer Heizeinrichtung; und mit einem Umluftgebläse, das von einem Motor antreibbar ist und das durch die Heizeinrichtung erwärmte Luft in den Aufnahmeraum zurückfördert, wobei eine Reifenhaltevorrichtung im Aufnahmeraum angeordnet ist und die Reifenhaltevorrichtung zumindest zwei beabstandet zueinander angeordnete aufrecht stehende Stützbügel aufweist, die über zwei horizontal angeordnete Auflageprofile miteinander verbunden sind, und wobei die Stützbügel Bohrungen einer Bodenwand des Gehäuses durchgreifen, so dass sie sich auf einem Abstützboden, auf dem das Gehäuse aufgestellt ist, abstützen.

Weitere Vorrichtungen zur Erwärmung von Reifen sind aus der US 2003 034 340 A1 und DE 102 52 924 A1 bekannt Aufgabe der vorliegenden Erfindung ist es, einen Reifenwärmer bereitzustellen, der die oben genannten Nachteile vermeidet.

Gelöst wird diese Aufgabe erfindungsgemäß durch einen Reifenwärmer mit den Merkmalen des Patentanspruchs 1. Durch das Zusammenspiel des erfindungsgemäß vorgesehenen Luftverteilers, der Abdeckhaube und der darunter angeordneten Heizeinrichtung entsteht unter der Abdeckhaube eine Luftzirkulation der erhitzen Luft, ohne dass diese verloren geht. Der Vorteil des erfindungsgemäßen Reifenwärmers liegt zum einen darin, dass nicht nur die Reifen, sondern die gesamten Räder aufgeheizt werden können. So wird insbesondere auch die Felge eines Rads aufgeheizt.

Eine Felge gibt auch noch Wärme an den Reifen ab, wenn das Rad aus dem Reifenwärmer entfernt wurde. Somit behalten die Reifen über einen längeren Zeitraum eine höhere Temperatur. Zum anderen können dadurch, dass eine elektrische Heizeinrichtung vorgesehen ist, die mit einer Gasheizung verbundenen Probleme vermieden werden. Außerdem ist der erfindungsgemäße Reifenwärmer relativ einfach aufbaubar und demontierbar, sodass er einfach von Rennstrecke zu Rennstrecke transportiert werden kann.

Besondere Vorteile ergeben sich, wenn das Gestell Rollen oder Räder aufweist, die ein Verfahren des Reifenwärmers erlauben. Somit ist es möglich, den Reifenwärmer in einer Box an unterschiedlichen Stellen zu platzieren. Auch ist es grundsätzlich möglich, die Räder im Reifenwärmer bis zu dem Fahrzeug zu transportieren, an dem die Räder montiert werden sollen. Somit können die Räder über einen sehr langen Zeitraum warmgehalten werden. Erfindungsgemäss ist die Abdeckhaube als Plane oder einem anderen flexiblen Material ausgebildet. Daher ist es von Vorteil, wenn am Gestell eine Schiebevorrichtung, beispielsweise ein Bügel in Greifhöhe angebracht oder anbringbar ist. Somit kann vermieden werden, dass beim Verschieben der Vorrichtung die Abdeckhaube eingedrückt wird.

Weitere Vorteile ergeben sich, wenn eine Aufnahme für die Reifen und/oder Räder vorgesehen ist. Grundsätzlich ist es denkbar, die Reifen und/oder Räder nebeneinander anzuordnen und seitlich mit warmer Luft anzuströmen. Besonders platzsparend ist jedoch eine Anordnung, bei der die Reifen und/oder Räder aufeinandergestapelt werden. Die Aufnahme dient daher als Auflage für ein Rad oder einen Reifen, auf das mehrere andere Räder und/oder Reifen gestapelt werden können.

Der Luftverteiler kann so angeordnet sein, dass die Felge eines Rads mit warmer Luft angeströmt wird. Felgen weisen in der Regel Öffnungen auf. Wird somit die Felge eines Rads warmer Luft angeströmt, so durchströmt die warme Luft die Felge des ersten Rads und erwärmt somit auch die Felge eines oder mehrerer nachfolgender Räder, insbesondere, wenn die Räder nebeneinanderstehen oder aufeinandergestapelt sind. Über die Felge kann dann wiederum Wärme an den Reifen abgegeben werden, sodass der Reifen nicht nur durch die warme Luft, die den Reifen umströmt, erwärmt wird, sondern auch über die Felge, die Wärme aufnimmt. Dabei kann der Reifenwärmer insbesondere so ausgebildet sein, dass die in dem Reifenwärmer angeordneten Reifen oder Räder zumindest entlang eines Teils ihrer Oberfläche von Luft umströmt werden. Insbesondere kann Luft durch die Räder im Bereich der Felge hindurch geströmt werden und an der Außenseite der Reifen bzw. des Reifenstapels zurückströmen. Dabei ist es besonders vorteilhaft, wenn ein gewisser Zwischenraum zwischen den Reifen und der Abdeckhaube vorhanden ist.

Weitere Vorteile ergeben sich, wenn Luftverteiler und Heizeinrichtung so angeordnet sind, dass die Heizeinrichtung mit Luft angeströmt wird. Insbesondere kann durch den Luftverteiler zunächst die Heizeinrichtung angeströmt werden. Dabei kann die Heizeinrichtung durchströmt werden und die durch die Heizeinrichtung erwärmte Luft kann dann den Reifen oder das Rad bzw. die Reifen und/oder Räder anströmen.

Vorteilhaft ist es, wenn die Heizeinrichtung als regelbares elektrisches Heizelement, bspw. als Rohrheizelement oder als PTC-Heizelement, ausgebildet ist. Derartige elektrische Heizelemente sind kostengünstig verfügbar und genau regulierbar. Außerdem können sie mit Luft durchströmt werden. Vorzugsweise entspricht die Fläche der Heizeinrichtung in etwa der Fläche des Luftverteilers. Insbesondere können die Heizeinrichtung und der Luftverteiler in etwa den gleichen Durchmesser aufweisen.

Ein Wärmeverlust kann dadurch vermieden werden, dass die Abdeckhaube aus thermisch isolierendem Material ausgebildet ist oder ein solches aufweist. Insbesondere kann die Abdeckhaube wattiertes Material aufweisen. Somit lässt sich die Effektivität des Reifenwärmers steigern.

Bei einer speziellen Ausführungsform des erfindungsgemäßen Reifenwärmers kann die Abdeckhaube aus einem atmungsaktiven Material ausgebildet sein oder ein solches aufweisen. Unter atmungsaktiv wird dabei verstanden, dass das Material wasserdampfdurchlässig ist. Sollten beispielsweise Räder, die nicht vollständig trocken sind, erwärmt werden, kann auf diese Art und Weise Wasserdampf entweichen. Somit dient der Reifenwärmer auch der Trocknung der Reifen.

Alternativ hierzu kann vorgesehen sein, dass die Abdeckhaube aus einem wasserfesten oder wasserdichten Material ausgebildet ist. Dadurch kann die Luftfeuchtigkeit unter der Abdeckhaube gehalten werden, wodurch die Wärmeleitfähigkeit erhöht wird. Die Wärmeleitfähigkeit kann bei dieser Ausführungsform weiter erhöht werden, wenn eine Vorrichtung zur Erhöhung der Luftfeuchtigkeit innerhalb des Heizraums vorgesehen ist. Dies kann bspw. durch einen Luftbefeuchter erfolgen, dessen Auslass in den durch das Gestell und die Abdeckhaube gebildeten Hohlraum ragt.

Gemäß einer Ausgestaltung der Erfindung kann vorgesehen sein, dass die Abdeckhaube abnehmbar ist und/oder eine verschließbare Öffnung zum Be- und Entladen der Räder aufweist. Wenn die Abdeckhaube abnehmbar ist, kann beispielsweise der Reifenwärmer mit Rädern beladen werden und anschließend die Abdeckhaube darübergestülpt werden. Gegebenenfalls kann sie an dem Gestell befestigt werden. Wenn die Abdeckhaube stationär vorgesehen ist, kann sie eine verschließbare Öffnung aufweisen. Beispielsweise kann die Abdeckhaube über einen Reißverschluss geöffnet und verschlossen werden.

Die Haube ist aus flexiblem Material ausgebildet. Beispielsweise kann die Haube aus einer Plane oder einem textilen Material ausgebildet sein. Wenn die Haube aus flexiblem Material ausgestaltet ist, kann sie ein besonders kleines Packmaß aufweisen, sodass der Reifenwärmer einfach von Rennstrecke zu Rennstrecke transportiert werden kann. Auch kann die Größe des Heizraums einfach variiert werden und an die Anzahl der zu erwärmenden Räder bzw. die Größe der Räder angepasst werden.

Die Abdeckhaube kann ein Gestänge, insbesondere ein wendelförmiges Gestänge, aufweisen. Dadurch kann die Haube nach Art eines Wurfzeltes einfach aufgestellt werden und zum Transport oder zum Räderwechsel zusammengedrückt werden. Außerdem verleiht das wendelförmige Gestänge der Abdeckungshaube eine gewisse Stabilität. Dadurch kann sichergestellt werden, dass die Abdeckhaube zu den Reifen einen gewissen Abstand aufweist, sodass die Reifen und/oder Räder gut von warmer Luft umströmbar sind.

Die Größe des Heizraums kann einstellbar sein. Dadurch lässt sich der Heizraum an die Anzahl und/oder Größe der zu heizenden Räder anpassen. Beispielsweise kann der Heizraum in der Höhe variabel sein. Besondere Vorteile ergeben sich, wenn ein erster Temperatursensor vorgesehen ist. Dadurch lässt sich der Erwärmungsprozess überwachen. Der erste Temperatursensor kann beispielsweise an der Abdeckhaube, insbesondere an der Innenseite der Abdeckhaube, angeordnet sein. Beispielsweise kann der erste Temperatursensor eingenäht sein. Der Temperatursensor kann drahtlos oder drahtgebunden mit einer Steuer- und/oder Regeleinrichtung verbunden sein. Für eine besonders genaue Messung der Reifentemperatur ist es vorteilhaft, wenn der erste Temperatursensor mit Kautschuk, Reifenmaterial oder Aluminium ummantelt ist.

Bei einer besonders bevorzugten Ausführungsform ist neben dem ersten Temperatursensor an der Abdeckhaube ein weiterer Temperatursensor vorgesehen, der in der Heizeinrichtung integriert oder an der Heizeinrichtung angeordnet ist, vorzugsweise in direktem Kontakt mit der Heizeinrichtung. Der weitere Temperatursensor ist vorzugsweise Teil einer Temperaturregeleinrichtung, die dafür sorgt, dass die Heizeinrichtung einen vorgegebenen Temperaturgrenzwert nicht überschreitet. Im Zusammenspiel beider Temperatursensoren kann eine optimal geregelte Erhitzung der Reifen und/oder Räder bis zu einem vorgegebenen Wert (z. B. 95°C) ohne überschreiten eines aufgrund von Sicherheitsmaßnahmen vorgegebenen Grenzwerts der Heizeinrichtung (z. B. 120°C) realisiert werden.

Durch eine Steuer- und/oder Regeleinrichtung kann sichergestellt werden, dass die Temperatur nicht zu hoch wird, insbesondere deutlich unter einer Zündtemperatur bleibt. Durch eine Zeitsteuerung, beispielsweise eine Zeitschaltuhr, kann die Dauer der Reifenerwärmung eingestellt werden. Die Steuer- und/oder Regeleinrichtung kann beispielsweise fernbedient werden. Insbesondere kann eine drahtlose Verbindung, insbesondere Bluetooth-Verbindung, zu einem mobilen Endgerät, auf dem eine entsprechende App installiert ist, vorgesehen sein.

Weiterhin kann ein Lufteinlass, insbesondere im Gestell im Bereich des Luftverteilers, vorgesehen sein. Dabei kann die Öffnung oder der Querschnitt des Lufteinlasses einstellbar sein, um dadurch die Menge zugeführter Luft zu regulieren. Sollte Luft aus der Abdeckhaube entweichen, kann auf diese Art und Weise frische Luft nachgeführt werden. Der Lufteinlass kann beispielsweise in Form eines Ventils, insbesondere eines Schnabelventils oder einer Rückschlagklappe realisiert sein, sodass nur Luft zugeführt wird, wenn dies benötigt wird.

Um das Erwärmen der Räder effektiv zu gestalten, kann die Innenseite der Abdeckhaube ein wärmereflektierendes Material aufweisen. Insbesondere kann eine silberfarbene Beschichtung vorgesehen sein.

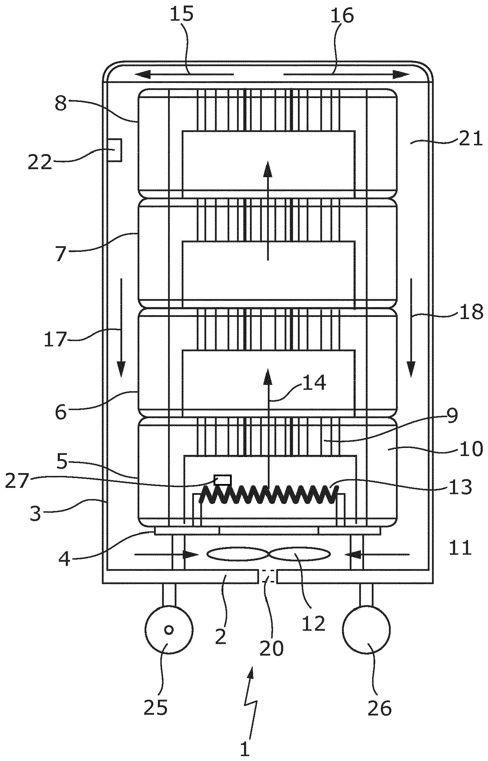

Weitere Merkmale und Vorteile der Erfindung werden anhand der nachfolgenden Beschreibung der einzigen Figur erläutert.

Dabei zeigt die einzige Figur schematisch einen erfindungsgemäßen Reifenwärmer.

Der Reifenwärmer 1 umfasst ein Gestell 2, an dem eine Abdeckhaube 3 angeordnet ist. Im vorliegenden Fall ist die Abdeckhaube 3 abnehmbar. Wenn die Abdeckhaube 3 abgenommen ist, können auf einer als Auflage ausgebildeten Aufnahme 4 Räder 5 bis 8 gestapelt werden. Die Räder 5 bis 8 weisen jeweils eine Felge 9 mit einem Reifen 10 auf. Die Auflage 4 weist eine Öffnung 11 auf, sodass Luft durch einen Luftverteiler 12, der als Ventilator ausgebildet sein kann, auf eine Heizeinrichtung 13 geblasen werden kann. Der Luftverteiler 12 ist somit in Strömungsrichtung gesehen vor der Heizeinrichtung 13 und der Felge 9 des ersten Rads 5 angeordnet. Die Luft strömt demnach durch die Heizeinrichtung 13 und die Felgen 9 der Räder 5 bis 8 in Pfeilrichtung 14. Die direkte Anordnung von Luftverteiler 12 und Heizeinrichtung 13 ist stets von der Ausprägung des eingesetzten Luftverteilers abhängig. Die Abdeckhaube 3 ist von dem obersten Rad 8 oben etwas beabstandet, sodass die Luft entlang der Pfeile 15, 16 umgelenkt und in Richtung der Pfeile 17, 18 wieder nach unten geleitet wird. Somit entsteht eine Luftzirkulation. Die Richtung der Luftzirkulation ist von dem verwendeten Luftverteiler 12 abhängig. Zum Beispiel ändert sich die Zirkulationsrichtung mit Wechsel zwischen Axialventilator und Radialventilator. Sollte durch die Abdeckhaube 3 Luft verlorengehen, kann durch einen Lufteinlass 20 Luft nachgeführt werden. Die Größe des Lufteinlasses 20 kann variabel sein, bspw. durch Vorsehen eines Schnabelventils oder einer Rückschlagklappe, um die Menge an Luft zu kontrollieren, die dem Reifenwärmer 1 zugeführt wird.

Durch die Abdeckhaube 3 wird ein Heizraum 21 begrenzt, in dem die Räder 5 bis 8 zum Erwärmen angeordnet sind.

Die Temperatur im Heizraum 21 kann über einen ersten Temperatursensor 22, der im gezeigten Ausführungsbeispiel an der Abdeckhaube 3 angeordnet ist, erfasst werden. Mittels eines zweiten am Heizelement angebrachten Temperatursensors 27 kann die Temperatur der Heizeinrichtung 13 überwacht werden. Der erste Temperatursensor 22 und/oder der zweite Temperatursensor 27 kann/können mit einer Steuer- und/oder Regeleinrichtung drahtgebunden oder drahtlos verbunden sein. Aufgrund der erfassten Temperatur(en) können dann der Luftverteiler und/oder die Heizeinrichtung 13 geregelt oder gesteuert werden. Die Steuer- und/oder Regeleinrichtung kann dabei auf einem mobilen Endgerät, beispielsweise einem Smartphone oder einem Laptop o. Ä., implementiert sein.

Der Reifenwärmer 1 ist auf Rädern 25, 26 angeordnet, sodass der Reifenwärmer 1 einfach verfahren werden kann.

## Patentansprüche

1. Reifenwärmer (1) zur Erwärmung von Reifen (10) oder Rädern (5 - 8), die eine Felge (9) und einen Reifen (10) aufweisen, mit einem Gestell (2) und einer an dem Gestell (2) angeordneten oder anorderbaren Abdeckhaube (3), die einen Heizraum (21) umgibt, in dem zumindest ein Rad (5 - 8) angeordnet werden kann, sowie einer elektrischen Heizeinrichtung (13) und einem Luftverteiler (12), **dadurch gekennzeichnet, dass** die Abdeckhaube (3) aus flexiblem Material gebildet ist.

2. Reifenwärmer nach Anspruch 1, **dadurch gekennzeichnet, dass** das Gestell (2) Rollen oder Räder, die ein Verfahren des Reifenwärmers (1) erlauben, aufweist.

3. Reifenwärmer nach einem der vorhergehenden Ansprüche, **dadurch gekennzeichnet, dass** eine Aufnahme (4) für die Reifen (10) und/oder Räder (5 - 8) vorgesehen ist.

4. Reifenwärmer nach einem der vorhergehenden Ansprüche, **dadurch gekennzeichnet, dass** der Luftverteiler (12) so angeordnet ist, dass die Felge (9) eines Rads (5 - 8) mit warmer Luft angeströmt wird.

5. Reifenwärmer nach einem der vorhergehenden Ansprüche, **dadurch gekennzeichnet, dass** die Heizeinrichtung (13) so angeordnet ist, dass der Luftverteiler (12) die Heizeinrichtung (13) anströmt.

6. Reifenwärmer nach einem der vorhergehenden Ansprüche, **dadurch gekennzeichnet, dass** die Heizeinrichtung (13) als regelbares elektrisches Heizelement ausgebildet ist, insbesondere als geripptes oder ungeripptes Rohrheizelement oder PTC-Heizelement.

7. Reifenwärmer nach einem der vorhergehenden Ansprüche, **dadurch gekennzeichnet, dass** die Abdeckhaube (3) aus thermisch isolierendem Material ausgebildet ist oder ein solches aufweist.

8. Reifenwärmer nach einem der Ansprüche 1 bis 7, **dadurch gekennzeichnet, dass** die Abdeckhaube (3) aus einem atmungsaktiven Material ausgebildet ist oder ein solches aufweist.

9. Reifenwärmer nach einem der Ansprüche 1 bis 7, **dadurch gekennzeichnet, dass** die Abdeckhaube (3) aus einem wasserfesten oder wasserdichten Material ausgebildet ist und dass der Reifenwärmer eine Vorrichtung zur Erhöhung der Luftfeuchtigkeit innerhalb des Heizraums (21) umfasst.

10. Reifenwärmer nach einem der vorhergehenden Ansprüche, **dadurch gekennzeichnet, dass** die Abdeckhaube (3) abnehmbar ist und/oder eine verschließbare Öffnung zum Be- und Entladen der Räder (5 - 8) aufweist.

11. Reifenwärmer nach einem der vorhergehenden Ansprüche, **dadurch gekennzeichnet, dass** die Abdeckhaube (3) ein Gestänge, insbesondere ein wendelförmiges Gestänge, aufweist.

12. Reifenwärmer nach einem der vorhergehenden Ansprüche, **dadurch gekennzeichnet, dass** mindestens ein Temperatursensor (22, 27) vorgesehen ist.

13. Reifenwärmer nach einem der vorhergehenden Ansprüche, **dadurch gekennzeichnet, dass** eine Steuer- und/oder Regeleinrichtung vorgesehen ist.

14. Reifenwärmer nach einem der vorhergehenden Ansprüche, **dadurch gekennzeichnet, dass** die Innenseite der Abdeckhaube (3) ein wärmereflektierendes Material aufweist.

## Claims

1. Tire warmer (1) for warming tires (10) or wheels (5 - 8) which have a rim (9) and a tire (10), comprising a frame (2) and a cover hood (3) which is or can be arranged on the frame (2) and surrounds a heating space (21) in which at least one wheel (5 - 8) can be arranged, and an electric heating device (13) and an air distributor (12), **characterized in that** the cover hood (3) is made of a flexible material.

2. Tire warmer according to claim 1, **characterized in that** the frame (2) has rollers or wheels which allow the tire warmer (1) to be moved.

3. Tire warmer according to either of the preceding claims, **characterized in that** a receptacle (4) for the tires (10) and/or wheels (5 - 8) is provided.

4. Tire warmer according to any of the preceding claims, **characterized in that** the air distributor (12) is arranged in such a way that warm air flows against the rim (9) of a wheel (5-8).

5. Tire warmer according to any of the preceding claims, **characterized in that** the heating device (13) is arranged in such a way that the air distributor (12) provides a flow against the heating device (13).

6. Tire warmer according to any of the preceding claims, **characterized in that** the heating device (13) is designed as a controllable electrical heating element, in particular as a ribbed or non-ribbed tubular heating element or as a PTC heating element.

7. Tire warmer according to any of the preceding claims, **characterized in that** the cover hood (3) is made of thermally insulating material or has such a material.

8. Tire warmer according to any of claims 1 to 7, **characterized in that** the cover hood (3) is made of a breathable material or has such a material.

9. Tire warmer according to any of claims 1 to 7, **characterized in that** the cover hood (3) is made of a water-resistant or waterproof material, and **in that** the tire warmer comprises an apparatus for increasing the air humidity inside the heating space (21).

10. Tire warmer according to any of the preceding claims, **characterized in that** the cover hood (3) can be removed and/or has a closable opening for loading and unloading the wheels (5 - 8).

11. Tire warmer according to any of the preceding claims, **characterized in that** the cover hood (3) has a linkage, in particular a helical linkage.

12. Tire warmer according to any of the preceding claims, **characterized in that** at least one temperature sensor (22, 27) is provided.

13. Tire warmer according to any of the preceding claims, **characterized in that** an open-loop and/or closed-loop control device is provided.

14. Tire warmer according to any of the preceding claims, **characterized in that** the inside of the cover hood (3) has a heat-reflecting material.

## Revendications

1. Chauffe-pneu (1) permettant de chauffer des pneus (10) ou des roues (5-8) qui présentent une jante (9) et un pneu (10), comportant un cadre (2) et un capot (3) disposé ou pouvant être disposé sur le cadre (2), ledit capot entoure un espace de chauffage (21) dans lequel au moins une roue (5-8) peut être disposée, ainsi qu'un dispositif de chauffage électrique (13) et un distributeur d'air (12), **caractérisé en ce que** le capot (3) est réalisé en un matériau souple.

2. Chauffe-pneu selon la revendication 1, **caractérisé en ce que** le cadre (2) présente des rouleaux ou des roues qui permettent de déplacer le chauffe-pneu (1).

3. Chauffe-pneu selon l'une des revendications précédentes, **caractérisé en ce qu'**un réceptacle (4) pour les pneus (10) et/ou les roues (5-8) est prévu.

4. Chauffe-pneu selon l'une des revendications précédentes, **caractérisé en ce que** le distributeur d'air (12) est disposé de telle sorte que la jante (9) d'une roue (5-8) est alimentée en air chaud.

5. Chauffe-pneu selon l'une des revendications précédentes, **caractérisé en ce que** le dispositif de chauffage (13) est disposé de telle sorte que le distributeur d'air (12) alimente le dispositif de chauffage (13).

6. Chauffe-pneu selon l'une des revendications précédentes, **caractérisé en ce que** le dispositif de chauffage (13) est conçu comme un élément de chauffage électrique réglable, en particulier comme un élément de chauffage tubulaire nervuré ou non nervuré ou un élément de chauffage PTC.

7. Chauffe-pneu selon l'une des revendications précédentes, **caractérisé en ce que** le capot (3) est réalisé en un matériau thermiquement isolant ou présente un tel matériau.

8. Chauffe-pneu selon l'une des revendications 1 à 7, **caractérisé en ce que** le capot (3) est réalisé en un matériau respirant ou présente un tel matériau.

9. Chauffe-pneu selon l'une des revendications 1 à 7, **caractérisé en ce que** le capot (3) est réalisé en un matériau résistant à l'eau ou étanche à l'eau et **en ce que** le chauffe-pneu comprend un appareil permettant d'augmenter l'humidité de l'air à l'intérieur de l'espace de chauffage (21).

10. Chauffe-pneu selon l'une des revendications précédentes, **caractérisé en ce que** le capot (3) peut être retiré et/ou présente une ouverture pouvant être fermée pour le chargement et le déchargement des roues (5-8).

11. Chauffe-pneu selon l'une des revendications précédentes, **caractérisé en ce que** le capot (3) présente une tringlerie, en particulier une tringlerie hélicoïdale.

12. Chauffe-pneu selon l'une des revendications précédentes, **caractérisé en ce qu'**au moins un capteur de température (22, 27) est prévu.

13. Chauffe-pneu selon l'une des revendications précédentes, **caractérisé en ce qu'**un dispositif de commande et/ou de réglage est prévu.

14. Chauffe-pneu selon l'une des revendications précédentes, **caractérisé en ce que** le côté intérieur du capot (3) présente un matériau réfléchissant la chaleur.
